# FASCICULE DE BREVET EUROPEEN

(11) **EP 2 440 975 B1**
(45) Date de publication et mention de la délivrance du brevet: **23.11.2016**
(21) Numéro de dépôt: 10737962.0
(22) Date de dépôt: 08.06.2010
(51) Int. Cl.: H04N 13/02

(54) **SYSTÈME ET PROCÉDÉ DE GÉNÉRATION D'IMAGE STÉRÉOSCOPIQUE A DÉCALAGE DES LOINTAINS PARAMÉTRABLE DANS UN SYSTÈME ET PROCÉDÉ À N APPAREILS DE PRISE DE VUE (N>1).**
SYSTEM UND VERFAHREN ZUR ERZEUGUNG STEREOSKOPISCHER BILDER UNTER VERSCHIEBUNG DER OBJEKTE IN DER FERNZONE PARAMETRIERBARE FÜR EIN SYSTEM UND VERFAHREN MIT N KAMERAS (N>1)
SYSTEM AND METHOD FOR STEREOSCOPIC IMAGE GENERATION WITH DISPLACEMENT OF THE REMOTE SUBJECTS PARAMETRISABLE IN A SYSTEM AND METHOD WITH N IMAGE CAPTURING DEVICES (N>1)

(30) Priorité: 08.06.2009 FR 0902752
(43) Date de publication de la demande: 18.04.2012
(73) Titulaire: Devigon, Erwan, 75019 Paris (FR)
(72) Inventeur: Devigon, Erwan, 75019 Paris (FR)
(86) Numéro de dépôt international: PCT/FR2010/051129
(87) Numéro de publication internationale: WO 2010/142904

(56) Documents cités:
- FR-A1- 2 888 346
- US-A1- 2004 223 051
- US-A1- 2004 247 176
- US-A1- 2007 058 249

## Description

### CADRE HISTORIQUE DE L'INVENTION

L'intention de la présente invention est d'innover dans le cadre de la prise de vue stéréoscopique, communément appelée "prise de vue en relief", technique qui consiste généralement à photographier une scène à l'aide de deux appareils de prise de vue afin de recréer la vision binoculaire humaine. Divers procédés permettent ensuite de montrer à l'oeil gauche du spectateur une des deux images résultante du procédé choisi, et à l'oeil droit du spectateur l'autre image résultante, de sorte que le cerveau juxtaposant ces deux visions distinctes en déduise une vision en relief de la scène représentée.
Les premières expériences dans ce domaine ont été réalisées il y a plus d'un siècle avec les premiers appareils photographiques, et depuis beaucoup de travaux ainsi que de nombreux appareils ont été mis en oeuvre pour moderniser la prise de vue stéréoscopique et sa diffusion. Pour la brièveté de cette exposé, nous n'en feront pas la liste exhaustive et prions les intéressés de consulter les nombreuses publications y référant.

Un des obstacles historiques des industries exploitant la prise de vue ou la diffusion stéréoscopique est le constat d'une certaine forme d'intolérance du cerveau humain à s'accommoder à la vision relief si les images stéréoscopiques qui lui sont présentées ne respectent pas certains facteurs clés. Le dénombrement et l'étude de ces facteurs ont suscité beaucoup de débats et de travaux de recherches afin de les cerner précisément. Cependant aujourd'hui ils sont encore discutés même si beaucoup de progrès ont permis de mieux les cerner. Il en résulte que l'industrie en général a encore des difficultés à assurer que les images stéréoscopiques produites ne génèrent pas un sentiment d'inconfort chez le spectateur quelconque, une fatigue de ses muscles oculaires, et parfois des maux de tête ou des malaises. D'une production à l'autre les paramètres sont exploités de façon hétérogène et la facture des résultats est donc très variée.

A l'heure actuelle, une nouvelle génération d'écrans permettant de diffuser des images stéréoscopiques commence à être mis sur le marché, et les projecteurs numériques des salles de cinéma permettent de plus en plus de proposer des films en relief. D'autres industries, comme par exemple l'industrie d'imageries médicales s'intéresse à la vision en relief. La vision d'images stéréoscopiques est donc susceptible de devenir le standard de diffusion d'images de demain.

L'inventeur y a vu une nécessité urgente de produire des images stéréoscopiques homogènes et conformes aux exigences physiologiques de l'être humain.

US2007058249 propose un système d'observation stéréo médical comprenant une unité d'imagerie stéréo ayant un premier système optique d'imagerie pour produire une première image pour un oeil gauche et un deuxième système optique d'imagerie pour produire une deuxième image pour un oeil droit, La première Image et la deuxième image ayant mutuellement une parallaxe; et une unité d'affichage stéréo pour afficher de façon stéréoscopique les images produites par l'unité d'imagerie stéréo, des positions focales du premier système optique d'imagerie et du deuxième système optique d'imagerie étant situées sur un côté objet d'une intersection d'axes optiques du premier système optique d'imagerie et du deuxième système optique d'imagerie.

### DESCRIPTION ABREGEE DE L'INVENTION

L'invention se propose ici d'exploiter un certain nombre de facteurs déterminés pour ensuite définir un procédé qui permette une production d'image(s) stéréoscopique(s) plus homogène et plus facile à mettre en oeuvre. L'intention première de l'invention est de produire une image stéréoscopique qui possède la caractéristique d'avoir un "décalage spécifique des lointains" spécifique quel que soit le plan de convergence spécifié. La notion relative au "décalage des lointains" (explicitée plus bas) est importante tant elle impact sur le confort de vision de l'image stéréoscopique. L'inventeur souhaite donc que son invention permette de la contrôler facilement afin que, dans le cadre d'une séquence vidéo en relief par exemple, les changements de différents paramètres de prise de vue ne perturbent plus ce "décalage des lointains". Autrement dit, une partie de l'invention a pour vocation de produire un image stéréoscopique par un procédé qui se soucie avant tout du "décalage des lointains", et qui fournit à cette contrainte fondamentale les moyens de sa coexistence avec les autres paramètres de la prise de vue stéréoscopique.

Cette intention première est susceptible de présenter un changement de paradigme dans la manière de générer des images stéréoscopique. Ainsi, dans le cadre exemplaire de l'utilisation de l'invention pour la génération de séquences d'images animées, l'animation d'un ou plusieurs des facteurs déterminants utilisés par le procédé permet d'obtenir dynamiquement un résultat homogène qui assure un plus grand confort visuel pour les spectateurs de ces séquences, ainsi qu'un contrôle optimal et aisé de la prise de vue en relief pour les opérateurs des industries de production d'images stéréoscopiques. L'invention leur permet en effet de mettre en oeuvre très facilement et sans risque n'importe quel mouvement de caméras, de distances focales (zooms) et d'objets scéniques tout en préservant les qualités essentielles à une vision confortable du relief. Jusqu'à présent ces mouvements se sont révélés compliqués, coûteux, et très risqués sur le résultat car comme expliqué plus haut, en prise de vue stéréoscopique, la moindre erreur d'appréciation de paramètre heurte souvent violemment le confort physiologique de l'être humain spectateur (fatigue oculaire, maux de tête, nausées). L'intention de l'invention est de rendre la prise de vue stéréoscopique presque aussi commode que la prise de vue traditionnelle.

Il est cependant important de noter que même si l'inventeur souhaiterait que l'utilisation de son invention évite tout inconfort, notamment chez les spectateurs, l'inventeur ne peux pourtant pas assurer et (ou) assumer une quelconque garantie de cette sorte. L'inventeur et ses ayant droits se dégagent donc de toutes responsabilités vis à vis des risques pour la santé des êtres vivants qui résulteraient de près comme de loin à l'exploitation de l'invention.

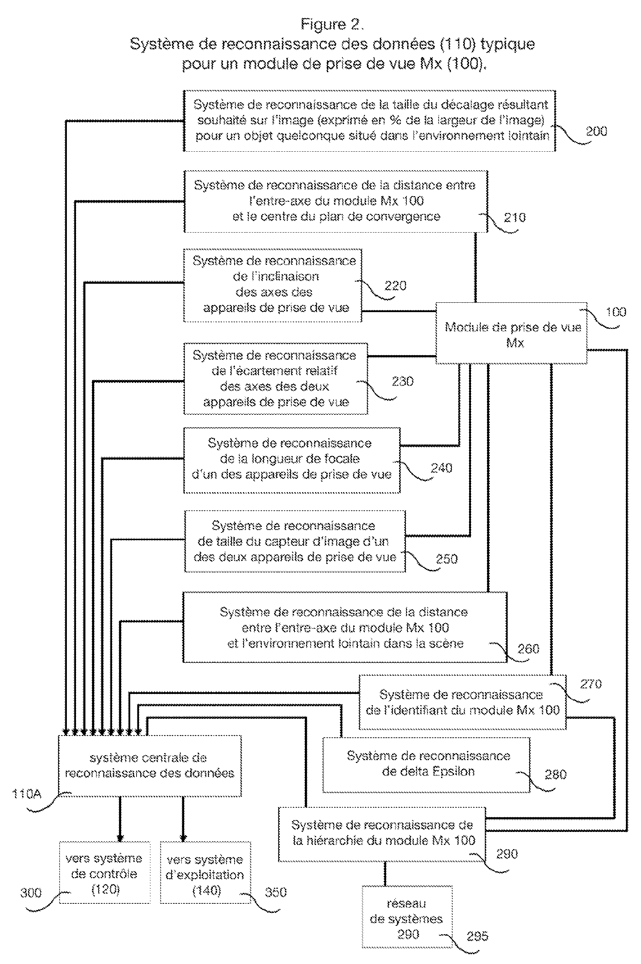

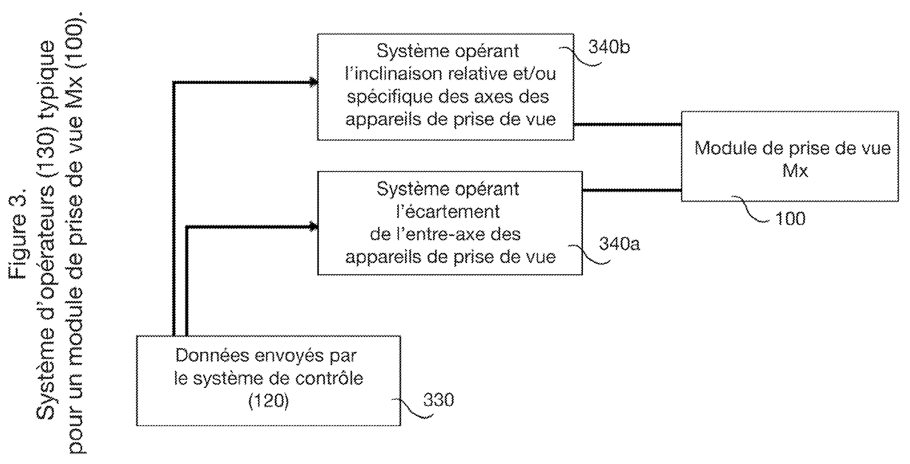

Selon l'invention, des effets de visualisation d'images en relief pour des images générées par ordinateur ou par des systèmes de prises de vue éventuellement assistés par ordinateur sont produits par l'attribution de distances et d'inclinaisons relatives ou spécifiques entre chacun des appareils de prise de vue appartenant à un (ou plusieurs) module(s). Pour cela, un procédé permet de déterminer spécifiquement ces distances et ces inclinaisons en fonction de plusieurs facteurs qui sont renseignés par un système de reconnaissance de ces facteurs (fig. 2). Un système de contrôle effectue des opérations de calculs spécifiques, et les résultats produits sont transmis à un système d'opérateurs (fig.3) qui les mets en oeuvre.

Dans chaque module, ces facteurs sont:
1°) Pour chaque appareil de prise de vue: La longueur de focale. La taille du capteur d'image.
2°) Pour les objets contenus dans la scène à représenter sur l'image stéréoscopique: La distance estimée qui sépare le module de l'environnement "lointains" de la scène qui sera représentée sur l'image stéréoscopique (voir détails plus bas). La distance souhaitée entre le module et le centre du plan de convergence dans la scène qui sera représentée sur l'image stéréoscopique (par exemple "tel personnage devra être dans le plan de convergence, le centre du plan de convergence souhaité sera donc à telle distance du module").
3°) Pour l'image stéréoscopique à générer: La taille du "décalage des lointains" souhaité, c'est à dire la taille souhaitée du décalage résultant sur l'image stéréoscopique de la représentation stéréoscopique d'un quelconque objet situé dans l'environnement lointain.

Une partie d'un des procédés de l'invention va permettre, d'après ces paramètres, de déterminer la position relative de chaque appareil de prise de vue (l'un par rapport à l'autre) d'un même module afin de produire le "décalage des lointains" et l'emplacement du plan de convergence souhaités, puis de procéder aux ajustements déterminés sur le module.
Certains aspects de l'invention permettent la ou les variation(s) d'un ou plusieurs facteur(s) susnommés tout en obtenant dynamiquement les résultats souhaités de "décalage des lointains" et d'emplacement du plan de convergence.
Un autre aspect de l'invention permet en plus une exploitation ultérieure d'un (ou plusieurs) facteur(s) impliqué(s) dans les procédés.
Un autre aspect de l'invention est de mettre en place un système automatisé qui peut permettre de réduire le temps de production de séquences d'images stéréoscopiques conformes au niveau du temps réel.
Un autre aspect de l'invention est un système qui permet à plusieurs modules d'avoir en commun un ou plusieurs appareils de prise de vue tout en conservant la capacité de produire des images stéréoscopiques conformes. Ce système est également susceptible d'exercer en temps réel.

### NOTE SUR LE COPYRIGHT

Une partie de ce document dévoile du matériel algorithmique dont l'inventeur revendique être l'auteur. Tous les droits d'auteurs de ce matériel sont réservés à l'inventeur.

### BREVE DESCRIPTION DES DESSINS

Dans le but de faciliter la compréhension complète de l'invention, des références sont faites aux dessins ci-dessous. Compte tenu que ces dessins ne sont pas à considérer comme le cadre limité du champ de l'invention, les descriptions détaillées de contextes et de modèles opérants sont expliquées avec des références qui renvoient à une utilisation des dessins qui facilite la compréhension. Ces dessins sont :
Fig.1 est un diagramme du processus de flux de données à travers un système spécifique de l'invention.
Fig. 2 est un diagramme d'un système de reconnaissance 110 typique pour un module Mx 100 de prise de vue tel que le conçoivent certaines configurations de l'invention. (x correspond au numéro (ou identifiant) du module concerné.)
Fig. 3 est un diagramme du système d'opérateurs 130 typique pour un module Mx 100 de prise de vue tel que le conçoivent certaines configurations de l'invention. (x correspond au numéro (ou identifiant) du module concerné.)

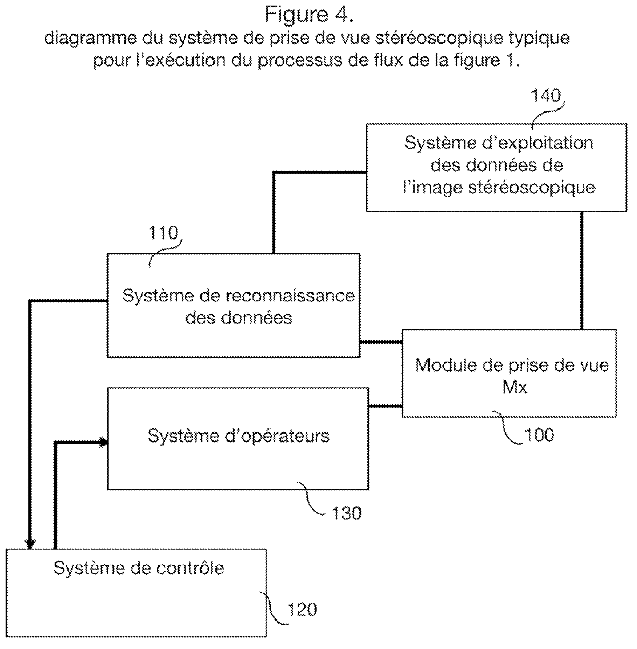

Fig. 4 est un diagramme du système global typique pour l'exécution du processus de flux de la figure 1.
Fig. 5 est une représentation typique d'un module Mx 100 idéal tel qu'en exploite l'invention.

### DESCRIPTION DETAILLEE DE L'INVENTION

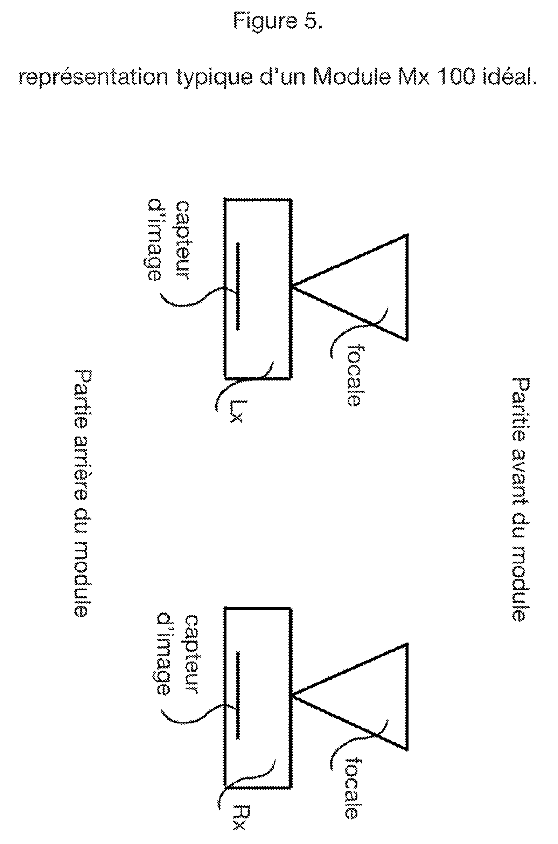

Dans l'ensemble du présent document :
- est appelé "appareil de prise de vue" l'outil assimilable à un outil idéal composé d'un ensemble optique et d'un capteur, et dans lequel l'axe optique est perpendiculaire au plan défini par le capteur, et dans lequel le centre optique et le centre du capteur sont alignés dans l'axe optique, et dont l'usage est susceptible de produire une image à deux dimensions à partir d'une scène observé par l'appareil de prise de vue. Le système d'exploitation 140 de l'image produite est donc, pour la commodité de compréhension, considéré indépendamment de l'appareil de prise de vue dans le présent document.
- est appelé "module" l'ensemble défini par un système permettant de produire au moins une image stéréoscopique et pouvant être assimilable à un couple d'appareils de prise de vue. Par exemple un système comprenant un seul appareil de prise de vue et un couple de miroirs convenablement disposés et orientés peuvent être assimilable a un couple d'appareils de prise vue. Pour la commodité de compréhension de l'invention, nous décrivons son fonctionnement dans le cas d'un "module idéal" 100 composé de deux appareils de prise de vue (Fig. 5).

- est qualifiée "d'image stéréoscopique" l'image qui résulterait de la superposition des deux images capturées simultanément par chaque appareil de prise de vue d'un même module.
- dans tous les procédés, le centre du capteur d'image d'un appareil de prise de vue représente l'origine d'un repère orthogonal normé (X,Y,Z), où Z défini l'axe passant par le centre du capteur et le centre optique de l'appareil, et où Y défini l'axe passant par le centre du capteur et étant parallèle à la hauteur du capteur de l'appareil. Ce point origine du repère (X,Y,Z) défini également le centre des axes de rotation (X,Y,Z) de l'appareil. Le repère (X,Y,Z) constitue le référentiel propre à l'appareil.
- est appelé "entre-axe du module" le milieu du segment imaginaire (usuellement appelé "baseline") qui relie les référentiels des deux appareils d'un même module 100 (fig. 5).

Fig. 5 est une représentation typique d'un module Mx 100 idéal tel qu'en exploite l'invention.

L'invention porte sur un nombre N de modules assimilables à un nombre N de Module Mx 100 ((x correspond au numéro (ou identifiant) du module concerné).

Dans le cas où plusieurs modules Mx 100 sont employés, un même appareil de prise de vue peut être commun à plusieurs modules Mx 100. Par exemple, l'utilisation de trois appareils de prises de vue peut être assimilée à l'utilisation de deux modules Mx 100 (respectivement appelés par exemple M1 100 et M2 100) dès lors que les propriétés de M1 100 et de M2 100 répondent aux caractères typiques du module Mx 100 tel que décrits ci-dessous.

Pour simplifier la compréhension de l'invention, le présent exposé se place dans un système idéal où le module Mx 100 correspond à la description de la figure 5, étant entendu que le module Mx 100 peut être n'importe quel système assimilable à un "module" tel que défini plus haut, c'est à dire composé de (ou virtuellement assimilable à) deux "appareils de prise de vue" tels que décrits plus haut (appelés ici respectivement Lx et Rx) capables de faire varier l'écartement inter-axiale entre Lx et Rx (baseline) au moyen d'un quelconque système et capable de faire varier l'inclinaison relative entre Lx et Rx et/ou l'inclinaison spécifique de Lx et Rx selon l'axe de rotation Y de chaque appareil par rapport à la baseline au moyen d'un quelconque système, et capable de transmettre à un système d'exploitation 140 un signal d'image stéréoscopique.

Dans un tel système Mx 100, les centre optiques et les centres des capteurs des deux appareils sont coplanaires avec le plan (XZ) d'un des deux appareils, autrement dit les plans (XZ) des deux appareils sont toujours coplanaires.

Lorsque les axes optiques de Lx et Rx sont parallèles, c'est à dire que les plans (XY) des deux appareils sont coplanaires, le capteur de Lx et coplanaire au capteur Rx, et ce plan défini l'arrière du module Mx 100, et les ensembles optiques de Lx et Rx définissent l'avant du module Mx 100.

Lorsque l'écartement inter-axial entre Lx et Rx est supérieur à zéro, un observateur situé derrière le module Mx 100, regardant vers l'avant du module Mx 100, peut identifier Lx et Rx en considérant que Lx est l'appareil de prise de vue situé à gauche de l'entre-axe du module Mx 100 et Rx est l'appareil de prise de vue situé à droite de l'entre-axe du module Mx 100.

A l'usage, si un appareil employé pour assumer le rôle de Lx ou Rx a son repère orthogonal normé (X,Y,Z) ne coïncidant pas exactement avec repère orthogonal normé (X,Y,Z) idéal tel que défini, il peut tout de même être assimilé à un appareil du module Mx 100 et être exploité par l'invention dès lors que l'échelle du différentiel entre le repère (X,Y,Z) constaté et le repère (X,Y,Z) idéal est suffisamment faible par rapport à l'échelle de l'ensemble constitué par le module Mx 100 et la scène à représenter en image stéréoscopique pour ne pas trop perturber les mesures et les calculs impliqués dans l'invention. Le cas échéant, le paramètre "delta Epsilon" du système 280 peut être utile pour améliorer le résultat de l'image stéréoscopique.

L'usage courant de la prise de vue en relief utilise au sein d'un module assimilable à un module Mx 100 des appareils de prise de vue Lx et Rx identiques. En ce sens, l'usage courant en prise de vue stéréoscopique ainsi que l'invention supposent que les informations de tailles des capteurs d'image et des longueurs de focales de Lx et Rx varient identiquement dans un module Mx 100. Si en pratique tel n'était pas le cas, il reviendra à l'utilisateur d'effectuer les conversions nécessaires afin que le résultat de la superposition des images de Lx et Rx donnant une image stéréoscopique soit assimilable à l'usage d'un module Mx 100 idéal.
Dans tout les cas, plus le dispositif mis en place se rapprochera des conditions idéales décrites par l'invention, plus l'image stéréoscopique produite grâce à l'invention répondra aux qualités espérées.

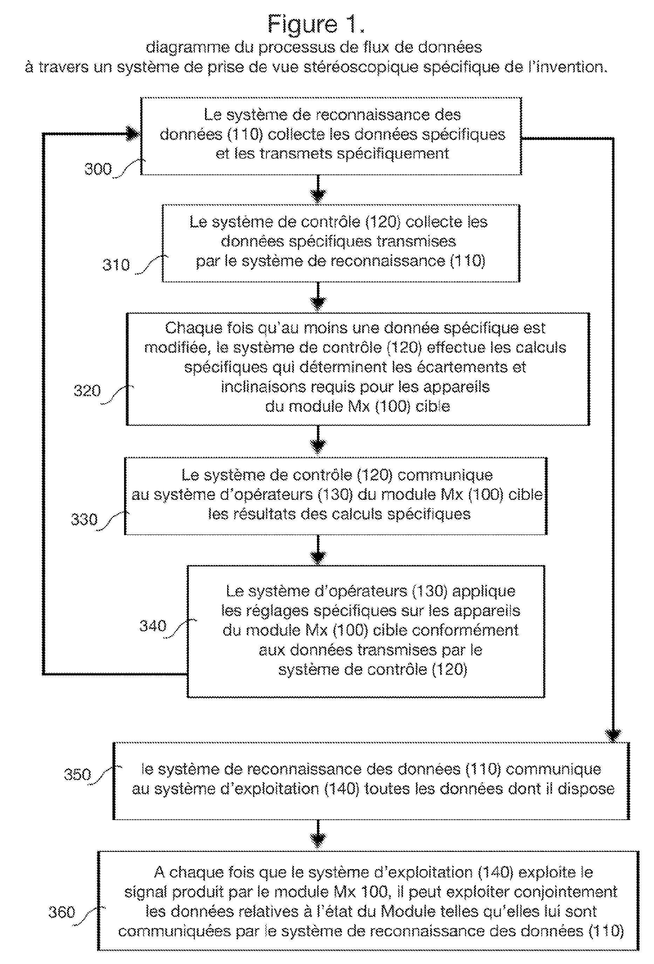

Fig. 1 est un diagramme du processus de flux de données à travers un système spécifique de l'invention. La configuration minimale d'un tel système est décrite par les étapes 300, 310, 320, 330, 340. Les sous-systèmes impliqués dans ce procédé peuvent également être capables d'autres facultés utilisés dans d'autres configurations de l'invention, notamment lorsque plusieurs modules Mx 100 sont imbriqués. En ce sens, l'invention possède un champ d'applications assez vaste, du très simple aux plus complexe, et pour la brièveté de la description, ces différents types de configuration de systèmes et procédés sont expliqués de façon linéaire plutôt qu'au cas par cas, de sorte qu'il appartient à l'utilisateur de se représenter quelles composantes correspondent vraiment à ses besoins, et de ne pas forcément exploiter tous les outils et procédés proposés par l'invention.

Fig. 2 est un diagramme d'un système de reconnaissance 110 typique pour un module Mx 100 de prise de vue tel que le conçoivent certaines configurations de l'invention. (x correspond au numéro (ou identifiant) du module concerné).

Dans le contexte maximal, le système de reconnaissance des données 110 peut-être n'importe quel système capable d'attribuer un identifiant au module Mx 100 visé, de collecter et regrouper (110A) les données qui intéressent les procédé fondamental et de les communiquer au système de contrôle 120 et au système d'exploitation 140, et de communiquer avec les autres systèmes 290 s'il y a un réseau (295) de systèmes 290, comme par exemple un ordinateur personnel connecté aux systèmes ci-dessus. Le système de reconnaissance des données 110 est donc l'entité qui regroupe tous les sous-ensembles 110A, 200, 210, 220, 230, 240, 250, 260, 270, 280, et 290. Si chacun des sous-ensembles 110A, 200, 210, 220, 230, 240, 250, 260, 270, 280, et 290 du système de reconnaissance des données 110 est capable de transmettre ses informations ainsi que l'identifiant du (ou des) module(s) Mx 100 auquel (auxquels) elles correspondent directement au système de contrôle 120 ainsi qu'aux autres systèmes impliqués dans la configuration choisie, alors le système de reconnaissance des données 110 est qualifié de "virtuel et transparent", c'est à dire qu'il est virtuellement présent en temps qu'entité globale des sous-ensembles 110A, 200, 210, 220, 230, 240, 250, 260, 270, 280, et 290. Dans certaines configurations, le système de reconnaissance des données 110 peut-être, par exemple, un ordinateur personnel exploité par un être humain et certains sous-ensembles peuvent être directement implanté dans cette interface, comme par exemple les sous-ensembles 200 et 280.
Comme expliqué plus haut, on considère qu'une image en relief optimale selon le procédé nécessite l'usage de distances focales et de tailles de capteurs identiques entre les deux appareils de prises de vue d'un même module Mx 100. Ces paramètres sont donc jumelés, c'est à dire que le procédé s'intéresse aux valeurs d'un seul des deux appareils du module Mx 100 et considère que celles de l'autre appareil sont identiques. Si les paramètres appliqués aux deux appareils d'un même module Mx 100 diffèrent, il reviendra à l'utilisateur d'effectuer les conversions nécessaires afin que la superposition des images donnant une image stéréoscopique soit conforme à l'usage et au bon fonctionnement du procédé.
Le système 110 a ici été présenté dans sa configuration optimale, c'est à dire que certaines qualités seront parfois inutiles à certaines utilisations de l'invention. Les descriptions ci-dessous de ses sous-systèmes prendront le temps de faire comprendre leurs potentiels d'utilisation, ce qui permettra d'en déduire une vision de la configuration spécifique du système 110 qui sera requit pour répondre aux besoins spécifiques des utilisateurs.

Le système 270 de reconnaissance de l'identifiant du module Mx 100 peut être n'importe quel système capable d'attribuer un identifiant au module Mx 100 et de transmettre cette information au système de reconnaissance des données 110, comme par exemple un ordinateur personnel. Un tel système est utile lorsque plusieurs modules Mx 100 partagent au moins un des systèmes ou appareils impliqués dans l'invention.

Le système 110A peut-être n'importe quel système capable de relier les données qui transitent par lui avec l'identifiant du module indiqué par le système 270 afin de renseigner convenablement le système de contrôle 120 si celui-ci gère plusieurs module Mx 100, comme par exemple un ordinateur personnel. En configuration minimal (un seul module Mx 100) il n'est donc pas nécessaire, c'est pourquoi les descriptions des sous-systèmes du système 110 ne le mentionnent pas à moins que leur présence le rende absolument nécessaire. Cependant, dans les cas où la configuration requise nécessite la présence du système 110A, tous les sous-systèmes du système 110 doivent faire transiter par le système 110A les données qu'ils envoient au système de contrôle 120 et au système d'exploitation 140. Le système 110A est considéré virtuellement présent si chaque sous-système du système 110 est capable d'accomplir la tâche qui incombe au système 110A.

Le système de reconnaissance 210 de la distance entre l'entre-axe du module Mx 100 et le centre du plan de convergence dans la scène qui sera représentée sur l'image stéréoscopique peut être n'importe quel système capable de déterminer cette distance et de la communiquer au système de contrôle 120, comme par exemple un être humain muni d'un appareil de mesure et d'une interface (un ordinateur personnel par exemple) lui permettant de communiquer cette donnée au système de contrôle 120, ou par exemple une commande électronique de mise au point (usuellement appelée remote controled focus) installée sur le module Mx 100 si l'utilisateur désire que la distance du plan de convergence soit corrélée avec la distance de mise au point.
Le système 210 peut également être un système capable de déterminer la distance entre n'importe quel point situé sur la baseline du module Mx 100 et le centre du plan de convergence dans la scène qui sera représentée sur l'image stéréoscopique et de la communiquer au système de contrôle 120. Dans cette configuration, plus le point de mesure choisi sur la baseline sera éloigné de l'entre-axe, plus le plan de convergence finalement constaté sur l'image stéréoscopique résultante sera différent du résultat espéré. L'utilisateur doit donc considérer sa tolérance à la marge d'erreur pour envisager cette configuration. Cependant, cette configuration n'a pas d'impact sur le "décalage des lointains".
Par convention, l'unité de mesure choisie pour exprimer les distances dans le système 210 est commune aux systèmes 230 et 260.

Le système 260 de reconnaissance de la distance entre l'entre-axe du module Mx 100 et l'environnement lointain dans la scène qui sera représentée sur l'image stéréoscopique peut-être n'importe quel système capable d'apprécier cette distance et de la communiquer au système de contrôle 120, comme par exemple un être humain muni d'un appareil de mesure et d'une interface (un molette électronique graduée par exemple) lui permettant de communiquer cette donnée au système de contrôle 120.
Par convention, l'unité de mesure choisie pour exprimer les distances dans le système 260 est commune aux systèmes 210 et 230.

Le système 250 de reconnaissance de la taille du capteur d'image d'un des appareils du module Mx 100 peut être n'importe quel système capable de déterminer ce paramètre et de le communiquer au système de contrôle 120, comme par exemple un être humain équipé d'une interface (un ordinateur personnel par exemple) lui permettant de communiquer cette donnée au système de contrôle 120. L'invention s'intéresse exclusivement à la largeur du capteur, c'est cette taille que doit savoir reconnaître et transmettre le système 250. Par convention elle est exprimée en pouces (Inches). Le contrôleur 120 suppose que les tailles de capteurs sont identiques pour les deux appareils de prise de vue du module Mx 100 et il utilise donc une seule valeur (même si elle peut-être variable). Si la taille des capteurs est différente entre les deux appareils, il faut dans ce cas que le système 250 soit en mesure de le savoir et de calculer la longueur de focale relative de l'appareil Rx (par exemple) afin que l'image que reçoit son capteur corresponde à celle qu'il recevrait s'il avait la même taille de capteur et la même longueur de focale que l'appareil Lx, et qui soit en outre capable de transmettre cette information à un système opérant des réglages de longueur de focale sur Rx. Un tel système opérant des ajustements de longueur de focale n'est pas décrit dans les dessins, car l'invention estime que cette configuration parasite la facilité de compréhension de l'invention. La vocation initiale de l'invention est d'être asservie aux paramètres de focales et de capteurs plutôt que de les contraindre. La mise en place d'un tel système opérant des changements de focale ne remet pourtant pas en cause cette vocation initiale dans le cadre de la prise de vue stéréoscopique, puisqu'il s'agit simplement de mettre en place des procédés de conversion bien connus par l'homme de métier. L'inventeur juge donc inutile de pousser plus loin cet argument, l'essentiel étant d'établir que le système de contrôle 120 simplifie sa tache en ne recevant qu'une seule valeur de largeur de capteur puisqu'il suppose qu'elle est commune aux deux appareils de prise de vue Lx et Rx.

Le système 220 relatif à la reconnaissance de l'inclinaison (selon l'axe Y) relative des deux appareils de prise de vue du module Mx 100 et/ou spécifique de chaque appareil, et le système 230 relatif à l'écartement inter-axial des deux appareils de prise de vue du module Mx 100, peuvent être n'importe quels systèmes capables de déterminer ces paramètres et de le communiquer au système d'exploitation 140 s'il y a lieu ainsi que, pour le système 220, au système de reconnaissance hiérarchique 290 s'il est présent, comme par exemple un être humain équipé d'une interface (un ordinateur personnel par exemple) lui permettant de communiquer ces données aux systèmes mentionnés. De nombreux outils électromécaniques existent également déjà pour assurer ces taches. Les systèmes 220 et 230 ne sont donc pas présents dans la configuration minimale de l'invention. Dans la configuration où un des appareils de prise de vue du module Mx 100 est contraint à avoir un angle déterminé, le système 220 est nécessaire et doit être capable de reconnaître cette contrainte d'angle spécifique et de la communiquer au système hiérarchique 290 ainsi qu'aux autres systèmes mentionnés ci-dessus dans les conditions également mentionnés, sauf si le système 290 est en même temps un système 220. Dans ce cas, le système 220 est virtuellement présent sous une forme plus perfectionnée.
Par convention, l'inclinaison relative et/ou spécifique est exprimée en degrés par rapport à la baseline dans le sens du cercle trigonométrique, et l'écartement inter-axial est exprimé selon l'unité de mesure commune choisie pour exprimer les distances dans les systèmes 210 et 260.

Le système 240 peut être n'importe quel système capable de reconnaître la longueur de focale d'un des deux appareils de prise de vue du module Mx 100 et de le communiquer au système de contrôle 120, comme par exemple un être humain équipé d'une interface (un ordinateur personnel par exemple) lui permettant de communiquer ces données au système de contrôle 120. De nombreux outils électromécaniques existent également déjà pour assurer ces taches. Par convention, la longueur de focale est exprimée en millimètres. Pour la même raison que celle exposé pour le système 250, le système de contrôle 120 simplifie sa tache en ne recevant qu'une seule valeur de longueur de focale de capteur puisqu'il suppose qu'elle est commune aux deux appareils de prise de vue Lx et Rx. S'y référer pour plus d'explications.

Le système de reconnaissance 200 de la taille du décalage horizontal résultant souhaité sur l'image stéréoscopique pour un objet quelconque situé dans l'environnement lointain de la scène qui sera représentée sur l'image stéréoscopique peut être n'importe quel système capable de déterminer ce paramètre et de le communiquer au système de contrôle 120, comme par exemple un être humain équipé d'une interface (un ordinateur personnel par exemple) lui permettant de communiquer cette donnée au système de contrôle 120. Cette valeur est exprimée en pourcentage de la largeur de l'image stéréoscopique à générer (par exemple 2.5%).
La notion relative à ce qui est convenu d'appeler "décalage des lointains" est importante pour le confort du spectateur. En effet, sur une image stéréoscopique obtenue par un module Mx 100, la géométrie de l'image Ax obtenue par l'appareil de prise de vue Lx diffère de la géométrie de l'image Bx obtenue par l'appareil de prise de vue Rx dès lors que les appareils Lx et Rx ont un écartement inter-axial différent de zéro. Ces différences se traduisent notamment par un décalage horizontal sur l'image stéréoscopique de la représentation d'un même objet situé dans l'environnement lointain de la scène, sauf si le plan de convergence est situé au niveau de cet objet. De ce type de décalage va résulter l'impression de relief créé par la vision de l'image stéréoscopique. Il est très important de considérer qu'au moment de la vision de l'image stéréoscopique, si ce décalage est trop important le cerveau va avoir du mal à faire "fusionner" l'image en relief de cet objet lointain, et dans ce cas il est d'usage de considérer que l'image stéréoscopique a un problème. D'autre part, lorsque l'image stéréoscopique est diffusée sur un support écran assez grand, ce décalage, même "relativement" léger, peut dépasser 6,5 cm sur l'écran. Ce décalage devient alors plus grand que l'écartement oculaire moyen de l'être humain, et il oblige donc le système oculaire du spectateur humain moyen à diverger lorsqu'il observe l'objet lointain représenté. Il est d'usage de considérer que cette situation est responsable d'une grande partie de l'inconfort ou des troubles observés chez les spectateurs puisque le système oculaire humain sait facilement faire converger les yeux mais parvient péniblement à les faire diverger, même légèrement. S'il est obligé de le faire pour observer l'objet lointain, il est également d'usage de considérer que l'image stéréoscopique a un problème. Le "décalage des lointains" est donc un facteur important, ne serait ce que d'après ces arguments, mais son dosage n'est pas encore formalisé tant il impact sur différents aspects de la prise de vue stéréoscopique, et il est donc souvent relégué à un problème secondaire regrettable. L'inventeur ne partage pas cet avis et pense qu'il s'agit juste d'un manque de moyens techniques regrettable. C'est pourquoi l'invention s'axe de sorte que la résolution de cette problématique soit la condition première autour de laquelle s'articule tout le reste. Le système de reconnaissance 200 est là pour déterminer quelle quantité correspondra au mieux à la diffusion de l'image que l'utilisateur souhaite produire, et les procédés utilisés par les systèmes de l'invention se charge ensuite d'assurer la concordance fiable de cette quantité sur les images stéréoscopiques produites par l'invention quelles que soient les valeurs des autres paramètres utilisés par le procédé pendant la prise de vue. Le système 200 est donc présent quelle que soit la configuration de l'invention.

Le système 280 de reconnaissance du delta Epsilon peut être n'importe quel système capable de déterminer cette donnée et de la communiquer au système de contrôle 120, comme par exemple un être humain muni d'une interface (un ordinateur personnel par exemple) lui permettant de communiquer cette donnée au système de contrôle 120. Delta Epsilon est un scalaire servant à tamponner l'invariance du décalage des lointains, et sa valeur classique conseillée pour delta Epsilon est 0,1. Comme l'invention utilise entre autre un algorithme qui fait actuellement appel à des calculs différentiels. Lorsque l'ordre de grandeur de la distance entre l'entre-axe du module Mx 100 et l'environnement lointain dans la scène qui sera représentée sur l'image stéréoscopique devient insuffisamment disproportionné par rapport à l'écartement inter-axial des deux appareils de prise de vue du module Mx 100, comme c'est le cas par exemple lors d'une prise de vue effectuée dans une petite pièce sans fenêtre, la concordance de la valeur transmise par le système de reconnaissance 200 avec la réalité observée sur l'image stéréoscopique peut manquer de précision si le calcul différentiel opéré par le procédé mis en jeu ne change pas son échelle de grandeur. Une légère variation du facteur delta Epsilon permet de recaler ce différentiel. Dans certaine configuration, la présence du système 280 n'est pas exigée par l'invention, comme par exemple dans le cas où l'algorithme qui l'utilise est capable de l'apprécier automatiquement ou bien de s'en passer. Des travaux de recherche allant dans ce sens sont déjà à l'étude.

Le système 290 de reconnaissance de la hiérarchie du module Mx 100 peut être n'importe quel système capable de situer et choisir la position hiérarchique du module Mx 100 dans un système à plusieurs modules Mx 100 imbriqués et de transmettre cette information au système 110A ainsi qu'aux systèmes 290 des autres modules Mx 100 impliqués dans cette configuration, comme par exemple un être humain équipé d'un ordinateur personnel. Dans les autres configurations de l'invention le système 290 n'est pas nécessaire, sauf celles mentionnées ci-après. Le système 290 doit également être relié à un système 220 capable de reconnaître l'inclinaison spécifique (selon l'axe Y) de chaque appareil de prise de vue de son module Mx 100, ou au moins de celle du (ou des) appareil(s) partagé(s) avec un (ou des) autre(s) module(s) Mx 100, sauf s'il est lui même capable de remplir les fonctions d'un tel système 220. Si le module Mx 100 a un de ses appareils Lx ou Rx qui est contraint par au moins un autre module Mx 100 à avoir un angle spécifique, le système de reconnaissance 290 doit également être capable de communiquer au système de contrôle 120.

Dans certaine configuration spécifique de l'invention où est nécessaire le système 290, une contrainte d'angle pour Lx ou Rx peut être présente sans que le module Mx 100 ne partage d'appareil(s) avec un ou plusieurs autres modules Mx 100, comme par exemple si un des deux appareils de prise de vue du module Mx est fixe ou subit une contrainte spécifique, comme par exemple lorsque le système opérant 340b n'agit que sur un appareil de prise de vue. Dans ces cas le système 290 n'a pas besoin d'être en relation avec d'autres systèmes 290 mais doit répondre aux autres critères de capacité. Dans certaines configurations de l'invention, le système 290 est présent parce qu'un ou plusieurs appareils de prise de vue du module Mx 100 est commun à un ou plusieurs modules Mx 100. Dans les cas où un seul appareil du module est partagé, il peut s'avérer judicieux de contraindre cet appareil à un angle fixe et de faire varier uniquement les angles des systèmes de prise de vue qui lui sont couplés.

Ce n'est pas obligatoire dans l'invention car des configurations où l'angle est contraint mais reste mobiles sont possibles. Par exemple celle où un appareil de prise de vue et commun à plusieurs modules Mx 100 pour lesquels une hiérarchie de priorité à l'angle entre les différents modules est établie, et où l'angle de l'appareil partagé reste modifiable pour un ou plusieurs modules Mx 100 selon cette hiérarchie, qui est elle même modifiable et défini de contraindre tel où tel module Mx 100 selon les besoins de tel ou tel module Mx 100. Dans un tel système contraignant, l'ensemble du système doit être suffisamment puissant pour que le temps nécessaire à l'accomplissement de l'ensemble des taches mis en jeu entre deux prises de vue soit conforme aux attentes du (ou des) utilisateur(s) de l'invention.

Dans de tels systèmes contraignants, le système 290 doit savoir gérer et transmettre les informations spécifiques à ces contraintes au système 110A, ainsi qu'être en liaison réseau (295) avec les systèmes 290 des autres modules Mx 100 imbriqués avec celui-ci s'il y en a.

Dans certaines configurations de l'invention, un système 290 peut également être mis en commun avec d'autres modules.

Un tel système imbriqué de modules Mx 100 est selon l'invention déclinable à l'infini. Il serait donc impossible d'en faire la liste exhaustive et l'inventeur laisse à l'utilisateur le soin d'imaginer la configuration exacte qui conviendra à son projet. L'inventeur se chargera de faire la publicité de l'invention afin de mieux mettre en valeur ses possibilités. Ci-dessous nous allons décrire en détail la configuration simple où un module Mx 100 partage un seul appareil avec un seul autre module Mx 100. Cette configuration peut par exemple être très utile dans le cas d'une captation stéréoscopique d'un événement (un match de foot par exemple) qui est diffusé sur différentes tailles d'écrans (des téléviseurs et des écrans géants par exemple). Dans cette hypothèse l'intention du producteur est d'avoir un plan de convergence situé au même endroit sur ces différents écrans tout en ayant les "décalages de lointains" les plus appropriés à ces écrans. Il choisira donc une taille de "décalages de lointains" spécifique pour les téléviseurs, et une taille de "décalages de lointains" plus réduite pour les écrans géants. Pour ces deux résultats, les réglages d'écartements inter-axial et d'angle entre les deux appareils de prise de vue ne sont pas les même, et il choisi donc de générer deux images stéréoscopiques distinctes depuis un même point de vue. Pour cela, l'invention propose d'imbriquer deux modules Mx 100 afin de lui économiser un appareil de prise de vue.

Dans cette configuration de l'invention, le système 290 du module Mx 100 (appelons-les respectivement par exemple système 290-1 et M1 100) est mis en réseau (295) à au système 290 de l'autre module Mx 100 (respectivement système 290-2 et M2 100) car les deux modules Mx 100 partagent un appareil de prise de vue, par exemple R1=L2. Le système, selon l'invention, procède de la façon suivante :
290A : Description du fonctionnement en réseau (295) d'interconnexion de plusieurs modules Mx 100 :
   Par exemple le système 290-1 envoie au système 290-2 les données suivantes :
      $stMx = identifiant (indiquée par 270) qui défini quel est le module Mx 100 qui est concerné par les données suivantes (ici $stMx = $stM1) ;
      $stMxIntercom = liste ordonnée de valeurs (ici $stMxIntercom = ( $stM1, 1 , 2 , $stM2, 2,0,$stM3, 0,0,..., $stMn,0,0) définissant les appareils mis en commun avec d'autres modules ; // Cette liste se présente par exemple de la sorte ($stM1, $L1, $R1, $stM2, $L2, $R2, ... , $stMn, $Ln, $Rn,) dans un ensemble de n modules Mx 100, où $stMn est un identifiant définissant le module n de type Mx 100, où $Ln est un scalaire indiquant si un module $Mx partage un appareil de ses appareils avec l'appareil Ln de $Mn, et où $Rn est un scalaire indiquant si un module Mx partage un de ses appareils avec Rn de $stMn. Pour le module Mx, $Ln=0 cela indique que $Mx ne partage pas Ln avec Mn. Si $Ln = 1 cela indique que Lx est commun à Ln. Et si $Ln=2 cela indique que Rx et commun à Ln. Il en va selon le même principe pour chaque appareil de chaque module Mx 100. Dans notre cas, L1=L1, R1=R1, L2=R1, et R2=R2.
      $stMxIntercomError = valeur scalaire décrivant l'état de conformité de $stMxIntercom sur le réseau (295). La valeur zéro décrit un état conforme. La valeur 1 décrit un état en erreur de système.
290B : Requête externe d'asservissement d'un module Mx 100. Le système 290 du module Mx 100 peut recevoir des autres systèmes 290 du réseau (295) les données suivantes :
   $stMx = identifiant (indiquée par 270) qui défini quel est le module Mx 100 qui est concerné par les données suivantes ;
   $stMxIntercom = liste ordonnée de valeurs définissant les appareils mis en commun avec d'autres modules ;
   $stCameraRotateYconstraintRequest = valeur scalaire de requête de contrainte de l'angle spécifique selon l'axe Y de l'appareil en commun entre les deux modules Mx 100. La valeur 0 indique qu'aucune contrainte n'est demandée. La valeur 1 indique qu'une contrainte est demandée pour Lx. La valeur 2 indique qu'une contrainte est demandée pour Rx ;
   $stCameraRotateYconstraint = valeur scalaire (indiquée par 220) indiquant si un appareil de prise de vue du module Mx 100 subit une contrainte d'angle spécifique selon l'axe Y. La valeur 0 indique qu'aucun appareil n'est contraint. La valeur 1 indique que Lx est contraint. La valeur 2 indique que Rx est contraint ;
   $stConstraintAngle = valeur scalaire (indiquée par 220) de l'angle de l'axe optique de l'appareil contraint par rapport à la baseline dans le sens de rotation du cercle trigonométrique ;
   Si le système 290 est en mode "maître impératif", il répond immédiatement $stConstraintAngleAnswer = 0 ;
si ce n'est pas le cas :

Le système 290 vérifie que $stMxIntercom est conforme à son propre $stMxIntercom ;

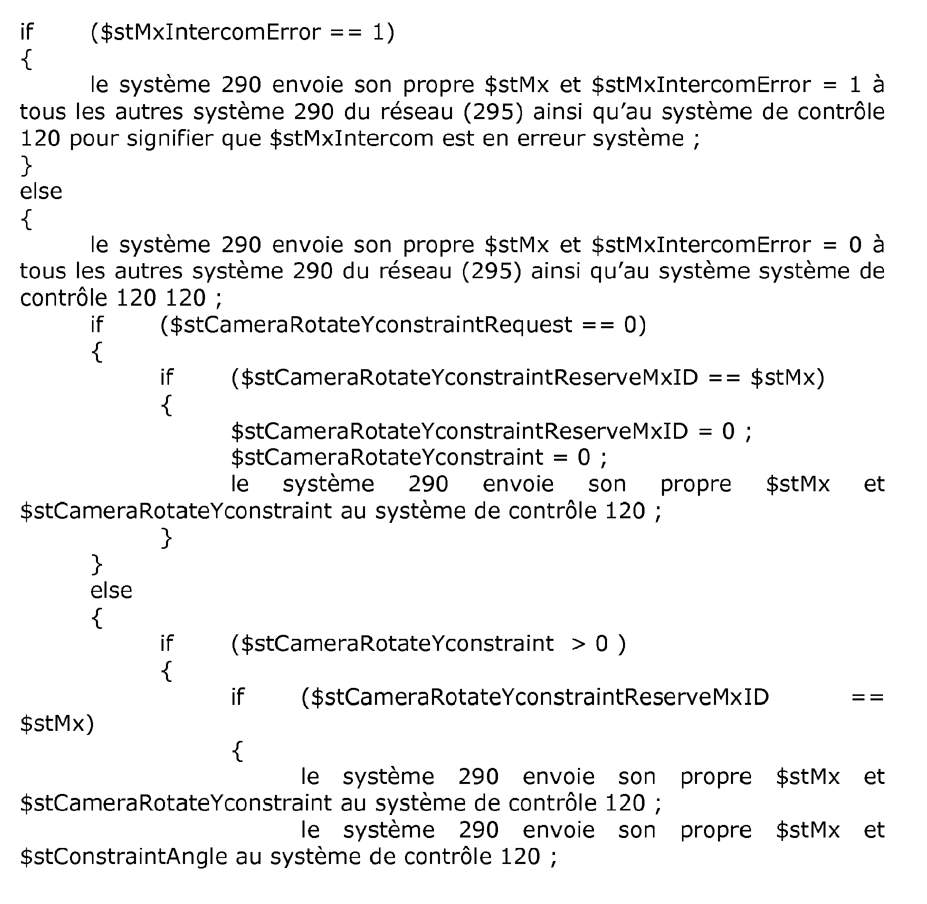

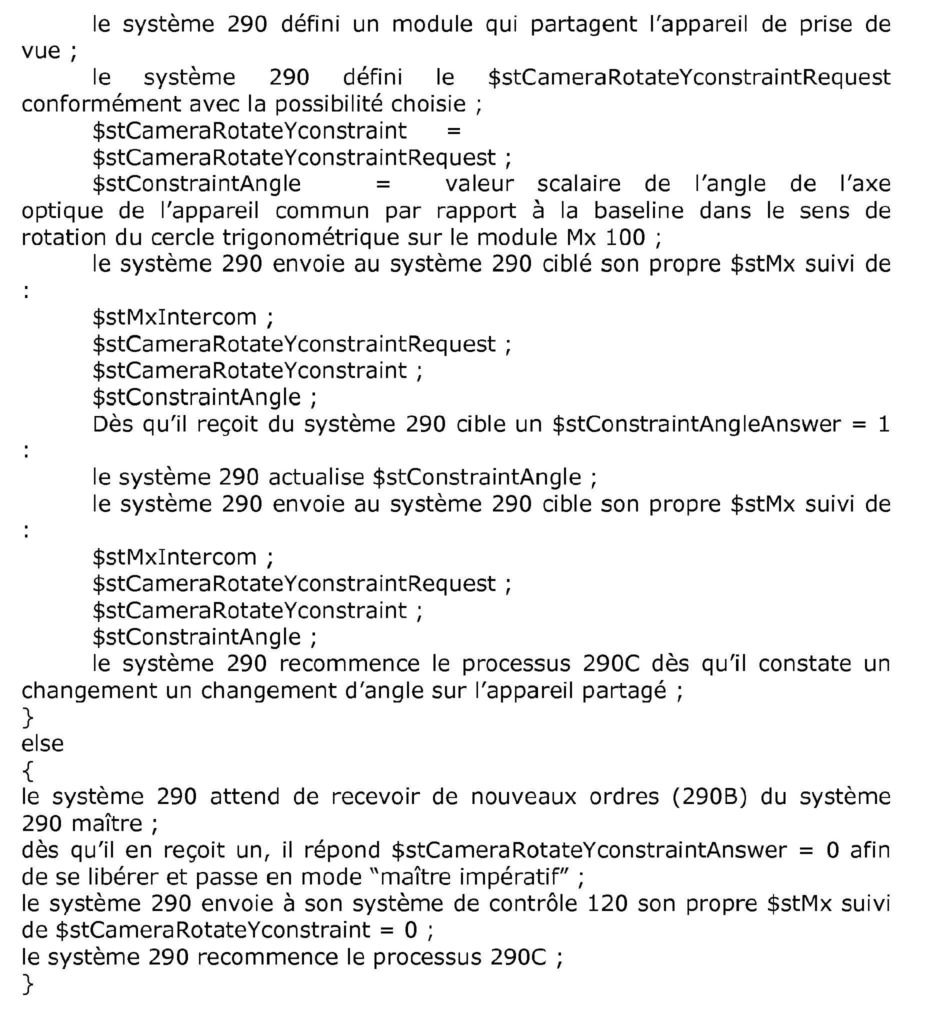

290C : Requête pour asservir un autre module Mx 100 : Le système 290 constate un requête interne pour passer en mode "maître-exclusif" ;

```
if ($stCameraRotateYconstraint == 0)
 {
     le système 290 consulte $stMxIntercom pour considérer la possibilité
     offerte d'asservissement ;
     le système 290 défini un module qui partagent l'appareil de prise de
     vue ;
     le système 290 défini le $stCameraRotateYconstraintRequest
     conformément avec la possibilité choisie ;
     $stCameraRotateYconstraint =
     $stCameraRotateYconstraintRequest ;
     $stConstraintAngle = valeur scalaire de l'angle de l'axe
     optique de l'appareil commun par rapport à la baseline dans le sens de
     rotation du cercle trigonométrique sur le module Mx 100 ;
     le système 290 envoie au système 290 ciblé son propre $stMx suivi de
     $stMxIntercom ;
     $stCameraRotateYconstraintRequest ;
     $stCameraRotateYconstraint ;
     $stConstraintAngle ;
     Dès qu'il reçoit du système 290 cible un $stConstraintAngleAnswer = 1
     le système 290 actualise $stConstraintAngle ;
     le système 290 envoie au système 290 cible son propre $stMx suivi de
     $stMxIntercom ;
     $stCameraRotateYconstraintRequest ;
     $stCameraRotateYconstraint ;
     $stConstraintAngle ;
     le système 290 recommence le processus 290C dès qu'il constate un
     changement un changement d'angle sur l'appareil partagé ;
     }
     else
     {
     le système 290 attend de recevoir de nouveaux ordres (290B) du système
     290 maître ;
     dès qu'il en reçoit un, il répond $stCameraRotateYconstraintAnswer = 0 afin
     de se libérer et passe en mode "maître impératif" ;
     le système 290 envoie à son système de contrôle 120 son propre $stMx suivi
     de $stCameraRotateYconstraint = 0 ;
     le système 290 recommence le processus 290C ;
     }
```

290D : Requête pour quitter le mode "maître-exclusif" : Le système 290 constate un requête interne pour passer en mode "maître-exclusif" ;
$stMaster = 0 ;

Le système de contrôle 120 peut être n'importe quel processeur capable de recevoir les informations délivrées par le système de reconnaissance 110 puis d'effectuer les opérations de calculs 320 nécessaires à la détermination des résultats qui correspondent aux ajustements qui seront effectués par les systèmes opérants 340a et/ou 340b, puis de les communiquer au système d'opérateurs 130. Un tel système 120 peut-être, par exemple, un ordinateur personnel. Le système 120 est présent dans toutes les configurations de l'invention. Dans certaines configurations de l'invention, le système 120 peut être mis en commun avec d'autres systèmes 110, dans ces cas la présence du système 270 est requise.

Etape 310 (fig. 1.) : Selon l'invention, le système de contrôle 120 reçoit du système de reconnaissance des données 110 les informations (ou une partie seulement, suivant le contexte) suivantes :
$stMx = identifiant (indiquée par 270) qui défini quel est le module Mx 100 qui est concerné par les données suivantes ; // $stMx est optionnel. Si le système de contrôle 120 ne reçoit pas d'information concernant $stMx, il considère qu'il n'a à gérer qu'un seul module Mx 100 et envoie ses résultat sans cet identifiant.
$stMxIntercomError = valeur scalaire 0 ou 1 (indiquée par 280) qui défini si le système est en erreur.
$stCFL = valeur scalaire (indiquée par 240) de la longueur de focale d'un des deux appareils de prise de vue du module Mx 100 ;
$stCHap = valeur scalaire (indiquée par 250) de la largeur du capteur d'image d'un des deux appareils de prise de vue du module Mx 100 ;
$stPC = valeur scalaire (indiquée par 200 et exprimée en %) du décalage résultant souhaité sur l'image stéréoscopique pour un objet quelconque situé dans l'environnement lointain de la scène qui sera représentée sur l'image stéréoscopique ;
$stEpsilon = valeur scalaire (indiquée par 280) de delta Epsilon ;
$stFp = valeur scalaire (indiquée par 260) de la distance entre l'entre-axe du module Mx 100 et l'environnement lointain dans la scène qui sera représentée sur l'image stéréoscopique ;
$stZpp = valeur scalaire (indiquée par 210) de la distance entre l'entre-axe du module Mx 100 et le centre du plan de convergence dans la scène qui sera représentée sur l'image stéréoscopique ; $stCameraRotateYconstraint = valeur scalaire (indiquée par 220) indiquant si un appareil de prise de vue du module Mx 100 subit une contrainte d'angle spécifique selon l'axe Y. La valeur 0 indique qu'aucun appareil n'est contraint. La valeur 1 indique que Lx est contraint. La valeur 2 indique que Rx est contraint ;
$stConstraintAngle = valeur scalaire (indiquée par 220) de l'angle de l'axe optique de l'appareil contraint par rapport à la baseline dans le sens de rotation du cercle trigonométrique ;
Si $stMxIntercomError = 1 alors le système de contrôle affiche un signal d'erreur système et ne poursuit pas le processus ;
Sinon :
// A l'allumage du système, toutes les données ci-dessus sont à zéro et le système de contrôle ne lance aucune des actions ci-dessous tant qu'il ne reçoit pas au moins une donnée différente de zéro pour l'un des paramètres suivant : $stCFL, $stCHap, $stPC, $stEpsilon, $stFp, et $stZpp. Ces paramètres sont les paramètres nécessaires au mode minimum du procédé.// Le système de contrôle 120 archive tous les nouveaux paramètres dont il dispose ;
Si une valeur antérieure pour chacun des nouveaux paramètres de ce module Mx 100 est déjà archivée par le système de contrôle 120, il compare chaque valeur à la nouvelle valeur relative ;

### Etape 320 (fig. 1.) :

Si et seulement si au moins un paramètre présente des valeurs comparées différentes, le système de contrôle 120 suspend (s'il y en a) les calculs en court relatifs au module concerné, puis il met en oeuvre le procédé suivant : La (ou les) nouvelle(s) valeur(s) écrase(nt) l(es) ancienne(s) dans les archives ;

```
$stAngleDeChamp = 2 * atand(25.4*$stCHap/(2*$stCFL)) ;
 if ($stFp == 0)
     $stFp = 0.001 ;
     }
     if ($stAngleDeChamp == 180)
     $stAngleDeChamp = 179.99 ;
     }
     $stT = tand($stAngleDeChamp * 0.5) ;
     $stA = (1 + $stPC/100) * $stT ;
     $sta = $stT - $stA + 0.5*$stEpsilon/$stFp ;
                              if ($sta == 0)
                                     $sta=0.001;
                                     }
     $stb = $stA * $stT - 0.5*$stEpsilon/$stFp - $stZpp/$stFp +
     1;
     $stc = $stT * $stZpp / $stFp ;
     $stD = $stb * $stb - 4*$sta*$stc ;
     if ($stD<0)
     { $stAngleAlpha = 90 ;
     }
     else
     { if ($stD == 0) // calcul de X=X0
                  {$stX0 = -$stb/(2*$sta) ;
                        if ($stX0 == 0)
                              $stX0 = 0.01 ;
                              }
                        if ($stX0 == 90)
                              { $stX0 = 89.99 ;
                              }
                        $stAngleAlpha = abs(atand($stX0)) ;
                  }
           else
                  { $stX1 = (-$stb - sqrt($stD))/(2*$sta) ;
                        $stX2 = (-$stb + sqrt($stD))/(2*$sta) ;
                              if ($stX1 == 0)
                                     { $stX1 = 0.01 ;
                                     }
                              if ($stX1 == 90)
                                     { $stX1 = 89.99 ;
                                     }
                              if ($stX2 == 0)
                                     { $stX2 = 0.01 ;
                                     }
                              if ($stX2 == 90)
                                     $stX2 = 89.99 ;
                                     }
                        $stAngleAlphal = atand($stX1) ;
                        $stAngleAlpha2 = atand($stX2) ;
                              if ((90 - abs($stAngleAlpha1)) < (90 -
                              abs($stAngleAlpha2)))
                                     { $stAngleAlpha =
                                     abs($stAngleAlphal) ;
                                     }
                              else
                                     { $stAngleAlpha =
                                     abs($stAngleAlpha2) ;
                                     }
                  }
     }
           if ($stAngleAlpha == 90)
                  { $stAngleAlpha = 89.99 ;
                  }
                  $stdc = abs(2 * $stZpp / tand($stAngleAlpha)) ;
                  $stRelativeAngle = (180 - (2 * $stAngleAlpha)) ;
     if ($stCameraRotateYconstraint == 1)
           $stCamLeftRotateY= $stConstraintAngle ;
                  $stCamRightRotateY = ( $stConstraintAngle +
                  $stRelativeAngle) ;
           }
     else
           { if ($stCameraRotateYconstraint == 2)
                        { $stCamLeftRotateY= ( $stConstraintAngle
                        - $stRelativeAngle );
                              $stCamRightRotateY =
     $stConstraintAngle ;
                        }
                  else
                        $stCamLeftRotateY= $stAngleAlpha ;
                              $stCamRightRotateY = ( 180 -
                              $stAngleAlpha ) ;
                        }
           }
```

### Exploitation des résultats:

Le système de contrôle 120 archive $stMx (s'il existe), $stRelativeAngle, $stCamLeftRotateY et $stCamRightRotateY et s'il y a des valeurs archivées plus anciennes pour ces deux paramètres il les efface ;

### Etape 330 (fig 1.) : Le système de contrôle 120 transmet au système d'opérateurs 130 les résultats ci-dessous :

```
select $stMx ; // s'il existe.
     {
     setAttr "stereoCameraLeft.rotateY" $stCamLeftRotateY ;
     setAttr "stereoCameraRight.rotateY" $stCamRightRotateY
     ;
     or
     setAttr "stereoCameraRelativeAngle" $stRelativeAngle ;
     }
     setAttr "stereoCameraInteraxialSeparation" $stdc ;
     unselect $stMx ; // s'il existe.
```

où $stMx est l'identifiant (indiquée par 270) qui défini quel module Mx 100 est concerné par les réglages de paramètres à opérer (dans le cas où le système d'opérateurs est commun à plusieurs Modules Mx 100), où $stCamLeftRotateY est la valeur scalaire de l'angle selon l'axe Y que doit avoir l'axe optique de Lx par rapport à la baseline dans le sens de rotation du cercle trigonométrique, où $stCamRightRotateY est la valeur scalaire de l'angle selon l'axe Y que doit avoir l'axe optique de Rx par rapport à la baseline dans le sens de rotation du cercle trigonométrique, où $RelativeAngle est la valeur scalaire de l'inclinaison relative selon l'axe Y des deux appareils de prise de vue du module Mx 100 si le système 100 travaille dans ce mode (cas rarissimes), et où $stdc est la valeur scalaire de l'écartement inter-axial des deux appareils de prise de vue du module Mx 100.

### Etape 340 :

Le système d'opérateurs 130 et ses sous-systèmes 340a et 340b peuvent-être n'importe quels systèmes capables de collecter les données communiquées par le système de contrôle 120 et de les mettre en oeuvre sur le module Mx 100 concerné, comme par exemple un être humain équipé d'une interface (un ordinateur personnel par exemple) connecté au système de contrôle 120. De nombreux outils électromécaniques existent également déjà pour assurer ces taches. Le système 130 est présent dans toutes les configurations de l'invention.
Le système opérant 340a opère l'écartement inter-axial des appareils de prise de vue du module Mx 100.
Le système opérant 340b, selon la configuration choisie, opère une inclinaison selon l'axe Y relative entre les deux appareils de prise de vue ou spécifique sur l'un et/ou l'autre appareil de prise de vue du module Mx 100.

A la fin de l'étape 340 du processus, le Module Mx 100 est capable d'effectuer un prise de vue stéréoscopique conforme à l'invention, et de la communiquer au système d'exploitation 140.

Le système d'exploitation 140 peut-être n'importe quel système capable de collecter les données communiquées par le module Mx 100 et, suivant les configurations de l'invention, par le système de reconnaissance des données 110, et de les exploiter, comme par exemple un système d'enregistrement ou un système de diffusion en direct. Un tel système est toujours présent dans le cadre de l'invention.
Selon certaines configurations de l'invention, les étapes 350 et 360 (fig.1) sont réalisées. Dans ces cas le système d'exploitation 140 doit avoir la capacité de recevoir et exploiter les données transmises par le système de reconnaissance des données 110. Ces étapes sont utiles dans le cas où, par exemple, l'utilisateur a l'intention de faciliter d'autres processus d'exploitations de l'image stéréoscopique, comme par exemple l'ajout d'effets de post-rendus visuels qui soient cohérents avec la géométrie spatiale de l'image stéréoscopique produite par le procédé. Avec ces données, il peut par exemple recréer un module Mx 100 virtuel conforme aux réglages du module Mx impliqué dans la génération de l'image stéréoscopique qu'il exploite, et ainsi insérer des objets de synthèse générés par ordinateur dans l'image stéréoscopique tout en conservant une conformité d'espace tridimensionnelle à l'image stéréoscopique résultant de ce mélange. Les configurations de l'invention qui intègrent cette possibilité de post-production sont donc recommandées.

### Résumé de synthèse du processus de flux de données de la fig. 1 :

Un des aspects de l'invention permet, dans le processus de la fig.1, au système de reconnaissance des données 110 de constater à tout moment l'état des réglages de paramètres sur le module Mx 100 (étape 300) et de les communiquer au système de contrôle 120 (étape 310).
A chaque fois que le système de contrôle 120 reçoit des données du système de reconnaissance des données 110 (étape 310), il effectue l'étape 320 du procédé afin de déterminer s'il y a lieu d'envoyer au système d'opérateurs 130 de nouvelles données de réglage. Si c'est cas il transforme immédiatement les données reçue selon son procédé pour obtenir les nouvelles données (étape 320) et les transmets au système d'opérateurs 130 (étape 330).
A chaque fois que le système d'opérateurs 130 reçoit des données de réglage transmises par le système de contrôle 120 (étape 330), il les mets immédiatement en oeuvre (étape 340).
A chaque fois que le système d'exploitation 140 exploite le signal d'image stéréoscopique produit par le module Mx 100 selon le procédé, s'il est en état de le faire, il collecte (étape 350) auprès du système de reconnaissance des données 110 l'état des réglages constaté à cet instant sur le module Mx 100 et les exploite (étape 360).

Dans le cas où les outils employés pour exploiter l'invention ou une configuration de l'invention sont suffisamment puissants pour produire les différentes étapes du processus en un temps très bref, comme par exemple dans le cas où des systèmes électromécaniques performants et/ou des ordinateurs assurent l'exécution du procédé de la figure 1, le procédé permet par exemple de produire en temps réel des séquences vidéos en relief qui comportent des mouvements de caméras et/ou de zooms et/ou de changements de plan de convergence ambitieux tout en préservant un "décalage des lointains" stable susceptible d'éviter une fatigue regrettable de l'appareil oculaire chez l'être humain spectateur.
Dans certaines situations, comme par exemple lorsqu'un logiciel informatique de génération d'images vidéo de synthèses exploite l'invention, l'ensemble des systèmes de l'invention peuvent être contenus dans un seul ordinateur personnel suffisamment puissant.

D'autre part lorsque l'invention est exploitée par un système de reconnaissance (110) capable de déterminer parfaitement et à chaque instant les paramètres usés par le procédé, comme par exemple un logiciel informatique de génération d'images vidéo de synthèses, l'invention est susceptible de révéler sa pleine puissance puisque l'utilisateur pourra éventuellement filmer sa scène en prise de vue stéréoscopique avec à peu près autant de souplesse que s'il filmait la scène avec une seule caméra, et effectuer ainsi une infinité de mouvements d'appareils et d'objets scéniques. Son attention dédiée à une belle prise de vue stéréoscopique se portera désormais essentiellement sur des choix esthétiques concernant le positionnement du centre du plan de convergence, en laissant à l'invention le soin de fournir automatiquement et en temps réel l'angle de convergence et l'écartement de baseline appropriés à une vision en relief confortable et homogène pour les spectateurs, à la condition que les conditions de diffusion des images en relief soient appropriées à ces choix. En ce sens, le choix de paramètre 200 relatif à l'écartement d'affichage des "objets lointains" devrait être cohérent avec celui du support de diffusion de l'image en relief afin d'éviter au spectateur un gros effort de vision en relief des objets situés dans l'environnement lointain. Un mauvais choix fait par le système de reconnaissance 200 relèvera donc d'un choix inapproprié fait par l'utilisateur sur l'outil utilisé pour assurer le rôle du système de reconnaissance 200, autrement dit d'une utilisation inappropriée de l'invention par son l'utilisateur due, par exemple, à sa méconnaissance du bon usage de l'invention. L'invention a été testée avec succès par l'inventeur, et d'une manière générale les défauts qui pourraient être éventuellement constatés sur une image stéréoscopique produite avec l'invention ne constitueront pas des défauts imputables à l'invention.

Cette invention innove en rendant possible une grande liberté d'action qui était jusqu'à présent inaccessible en production d'image stéréoscopique de cette qualité.

Toutes les industries produisant des images stéréoscopiques sont susceptibles de trouver un grand intérêt dans l'utilisation de l'invention.

## Revendications

1. Procédé de génération d'image stéréoscopique, comprenant les étapes suivantes:
- prévoir un module de prise de vues stéréoscopiques possédant un premier élément de prise de vues et un second élément de prise de vues ;
- déterminer des valeurs courantes de longueur de focale et de taille de capteur d'image présents sur le premier et sur le second élément de prise de vues ;
- déterminer la valeur de la distance entre le module de prise de vues et un arrière-plan, choisi dans une scène sujette à prise de vues,
- choisir une valeur souhaitée du décalage horizontal pour cet environnement d'arrière-plan dans l'image stéréoscopique finale ;
- déterminer la valeur de la distance entre un plan de convergence choisi et le module de prise de vues ;
- déterminer au moins une valeur interaxiale, propre à définir un écartement inter-axial à appliquer entre le premier et le second élément de prise de vues et au moins une valeur de convergence, propre à définir un écart angulaire de convergence à appliquer entre le premier et le second élément de prise de vues, à partir desdites valeurs courantes de longueur de focale et de taille du capteur d'image, de ladite valeur de la distance entre le module de prise de vues et l'environnement d'arrière-plan choisi, de ladite valeur souhaitée du décalage horizontal, et de ladite valeur de la distance entre un plan de convergence choisi et le module de prise de vues,
- appliquer la ou les valeurs inter-axiales et la ou les valeurs de convergence aux premier et second éléments de prise de vues,
- puis effectuer une prise de vues avec les premier et second éléments de prise de vues.

2. Système de prise de vues stéréoscopique, comprenant :
- un module de prise de vues stéréoscopique (100) possédant un premier élément de prise de vues (Lx) et un second élément de prise de vues (Rx) ;
- un système de reconnaissance de données (110) incluant
• un système de reconnaissance (240) des valeurs courantes de longueur de focale présentes sur le premier (Lx) et sur le second élément de prise de vues (Rx),
• un système de reconnaissance (250) des valeurs courantes de taille de capteur d'image présentes sur le premier (Lx) et sur le second (Rx) élément de prise de vues,
• un système de reconnaissance (260) de la valeur de la distance entre le module de prise de vues (100) et un arrière-plan, choisi dans une scène sujette à prise de vues,
• un système de reconnaissance (200) d'une valeur souhaitée du décalage horizontal pour cet environnement d'arrière-plan dans l'image stéréoscopique finale,
• un système de reconnaissance (210) de la valeur de la distance entre un plan de convergence choisi et le module de prise de vues (100),
- un système de contrôle (120), qui utilise les grandeurs collectées par le système de reconnaissance de données (110), pour déterminer au moins une valeur inter-axiale, propre à définir un écartement inter-axial à appliquer entre le premier et le second élément de prise de vues et au moins une valeur de convergence, propre à définir un écart angulaire de convergence à appliquer entre le premier (Lx) et le second (Rx) élément de prise de vues,
- un système d'opérateurs (130), qui applique la ou les valeurs inter-axiales et la ou les valeurs de convergence aux premier (Lx) et second (Rx) éléments de prise de vues, en vue d'effectuer une prise de vues avec les premier (Lx) et second (Rx) éléments de prise de vues, et
- un système d'exploitation (140) pour recevoir et exploiter les signaux d'images issus de ces prises de vues.

3. Système de prise de vues stéréoscopique selon la revendication 2, comprenant en outre un système de reconnaissance (280) d'une valeur tampon d'invariance choisie ("delta Epsilon"), tandis que le système de contrôle (120) est agencé pour ajuster, en fonction de cette valeur tampon, la ou les valeurs inter-axiales ainsi que la ou les valeurs de convergence.

4. Système de prise de vues stéréoscopique selon l'une des revendications 2 et 3, dans lequel le système de reconnaissance de données (110) comprend en outre un système de reconnaissance (220) de la ou des valeurs angulaires de convergence courantes des premier (Lx) et second (Rx) éléments de prise de vues.

5. Système de prise de vues stéréoscopique selon l'une des revendications 2 à 4 dans lequel le système de reconnaissance de données(110) comprend en outre un système de reconnaissance (230) des positions inter-axiales courantes des premier (Lx) et second (Rx) éléments de prise de vues.

6. Système de prise de vues stéréoscopique selon l'une des revendications 2 à 5, dans lequel le système d'exploitation (140) reçoit en outre certaines au moins des grandeurs élaborées par le système de reconnaissance de données(110).

7. Système de prise de vues stéréoscopique selon l'une des revendications 2 à 6, dans lequel le système de reconnaissance de données (110) comprend un moyen (270) agencé pour attribuer un identifiant à certains éléments au moins parmi le module de prise de vues stéréoscopique (100), le système de reconnaissance de données (110), ou leurs composants, et pour transmettre cet identifiant au système de contrôle (120) afin de permettre un traitement sélectif pour chaque élément de prise de vues.

8. Système de prise de vues stéréoscopique selon l'une des revendications 2 à 7, comprenant au moins deux éléments de prise de vues, agencés pour former, réellement ou virtuellement, au moins deux modules de prise de vues stéréoscopique distincts, avec partage, au moins en partie, de l'un au moins parmi le système de reconnaissance de données (110), le système de contrôle (120), le système d'opérateurs (130), et le système d'exploitation (140).

9. Système de prise de vues stéréoscopique selon la revendication 8, comprenant une pluralité d'éléments de prise de vues, agencés pour former, réellement ou virtuellement, un réseau de N modules de prise de vues stéréoscopiques (100), avec partage, au moins en partie, de l'un au moins parmi le système de reconnaissance de données (110), le système de contrôle (120), le système d'opérateurs (130), et le système d'exploitation (140).

10. Système de prise de vues stéréoscopique selon l'une des revendications 2 à 9 dans lequel le système de reconnaissance des données (110) est agencé pour définir au moins une donnée de contrainte hiérarchique (290), prise en compte au niveau du système de contrôle (120).

11. Système de prise de vues stéréoscopique selon l'une des revendications 2 à 10 dans lequel le système de reconnaissance (210) de la valeur de la distance du plan de convergence est associé à une commande de mise au point, pour interagir de sorte que les choix de l'emplacement du plan de convergence et de la distance de mise au point soient corrélés.

12. Système électronique de contrôle (120) d'un module de prise de vues stéréoscopique, pour la mise en oeuvre du procédé selon la revendication 1, comprenant
- des moyens d'entrée pour recevoir des variables exprimant des valeurs courantes de longueur de focale et de taille de capteur d'image présents sur les éléments de prise de vues du module, une valeur de distance entre le module de prise de vues stéréoscopique et un environnement d'arrière-plan, une valeur souhaitée de décalage horizontal pour cet environnement d'arrière-plan dans l'image stéréoscopique finale, et une valeur de distance entre le module de prise de vues stéréoscopique et l'emplacement souhaité du plan de convergence, et
- des moyens de traitement pour déterminer, d'après ces variables, des valeurs inter-axiales et de convergence à appliquer entre deux éléments de prise de vues du module de prise de vues stéréoscopique, et
- des moyens de sortie pour communiquer les valeurs déterminées inter-axiales et de convergence, à appliquer entre deux éléments de prise de vues d'un module de prise de vues stéréoscopique.

13. Système électronique de contrôle (120) selon la revendication 12, dans lequel les moyens d'entrée reçoivent aussi une valeur tampon d'invariance, permettant d'ajuster les résultats de valeurs inter-axiales et de convergence.

14. Système électronique de contrôle (120) selon l'une des revendications 12 et 13, dans lequel les moyens d'entrée reçoivent aussi au moins une donnée de contrainte hiérarchique à prendre en compte pour déterminer les valeurs inter-axiales et de convergence.

## Patentansprüche

1. Verfahren zum Erzeugen von stereoskopischem Bildmaterial, die die folgenden Etappen beinhalten:
- Bereitstellen eines stereoskopischen Kameramodul welches ein erstes und ein zweites Bildaufnahmeelement beinhaltet;
- Bestimmen der aktuellen Werte der Brennweite und Bildsensorgrösse, die auf dem ersten und zweiten Bildaufnahmeelement anwesend sind;
- Bestimmen des Wertes des Abstandes zwischen dem Kameramodul und einer Remote-Umgebung, die in der Aufnahmeszene ausgewählt ist;
- Auswählen eines gewünschten Wertes der horizontalen Abweichung für diese Remote-Umgebung im stereoskopischen Endbild;
- Bestimmen des Wertes des Abstandes zwischen einem ausgewählten Konvergenzplan und dem Kameramodul ;
- Bestimmen mindestens eines interachsialen Wertes, fähig einen interachsialen Zwischenraum zu definieren, anzuwenden zwischen dem ersten und zweiten Bildaufnahmeelement, und
bestimmen mindestens eines Konvergenzwertes, fähig einen Konvergenzwinkel zu definieren, anzuwenden zwischen dem ersten und zweiten Bildaufnahmeelement,
ausgehend von der besagten aktuellen Werte der Brennweite und Bildsensorgrösse, des besagten Wertes des Abstandes zwischen dem Kameramodul und der ausgewählten Remote-Umgebung, des besagten gewünschten Wertes der horizontalen Abweichung, und des besagten Wertes des Abstandes zwischen dem gewählten Konvergenzplan und dem Kameramodul ;
- Anwenden des oder der interachsialen Werte und des oder der Konvergenzwerte zwischen dem ersten und zweiten Bildaufnahmeelement ;
- Anschliessend durchführen einer Bildaufnahme mit dem ersten und zweiten Bildaufnahmeelement.

2. Stereoskopisches Bildaufnahmesystem, welches beinhaltet:
- ein stereoskopisches Kameramodul (100) dass ein erstes Bildaufnahmeelement (Lx) und ein zweites Bildaufnahmeelement (Rx) enthält;
- ein Data Erkennungssystem (110), welches beinhaltet
• ein Erkennungssystem (240) des aktuellen Wertes der Brennweite des ersten (Lx) und zweiten (Rx) Bildaufnahmeelementes,
• ein Erkennungssystem (250) des aktuellen Wertes der Bildsensorgrösse in das ersten (Lx) und zweiten (Rx) Bildaufnahmeelement,
• ein Erkennungssystem (260) des Wertes des Abstandes zwischen dem Kameramodul (100) und einer Remote-Umgebung ausgewählt im einer Aufnahmeszene,
• ein Erkennungssystem (200) des gewünschten Wertes der horizontalen Abweichung für diese Remote-Umgebung im stereoskopischen Endbild,
• ein Erkennungssystem (210) des Wertes des Abstandes zwischen einem ausgewählten Konvergenzplan und dem Kameramodul (100),
- ein Kontrollsystem (120), dass die gesammelte Werte des Data Erkennungssystem (110) benutzt,
um mindestens eines interachsialen Wertes zu bestimmen, fähig einen interachsialen Zwischenraum zu definieren, anzuwenden zwischen dem ersten (Lx) und dem zweiten (Rx) Bildaufnahmeelement, und
um mindestens eines Konvergenzwertes zu bestimmen, fähig einen Konvergenzwinkel zu definieren, anzuwenden zwischen dem ersten (Lx) und dem zweiten (Rx) Bildaufnahmeelement,
- ein Positioniersystem (130), mit dem das erste (Lx) und das zweite (Rx) Bildaufnahmeelement in Abhängigkeit des oder der interachsialen Werte und des oder der Konvergenzwerte verstellen sind, um eine Bildaufnahme mit dem ersten (Lx) und zweiten (Rx) Bildaufnahmeelement durchzuführen, und
- eine Betriebsvorrichtung (140) zum erhalten und zum nutzen der Signale hervorgegangen aus den Bildaufnahmen.

3. Stereoskopisches Bildaufnahmesystem nach Anspruch 2, beinhaltend ausserdem ein Erkennungssystem (280) des eines Invarianzdämpferwertes ("delta Ypsilon"), während das Kontrollsystem (120) bestimmt, je nach dem besagten Dämpferwert, des oder der interachsialen Werte sowie des oder der Konvergenzwerte.

4. Stereoskopisches Bildaufnahmesystem nach einem der Anspruche 2 oder 3, in dem das Data Erkennungssystem (110) ausserdem ein Erkennungssystem (220) des oder der aktuellen Konvergenzwinkelwerte des ersten (Lx) und zweiten (Rx) Bildaufnahmeelementes beinhaltet.

5. Stereoskopisches Bildaufnahmesystem nach einem der Anspruche 2 bis 4, in dem das Data Erkennungssystem(110) ausserdem ein Erkennungssystem (230) des oder der aktuellen interachsialen Positionen des ersten (Lx) und zweiten (Rx) Bildaufnahmeelementes beinhaltet.

6. Stereoskopisches Bildaufnahmesystem nach einem der Anspruche 2 bis 5, in dem das Betriebsvorrichtung (140) ausserdem einige der mindestens elaborierten Werte des Data Erkennungssystem (110) erhält.

7. Stereoskopisches Bildaufnahmesystem nach einem der Anspruche 2 bis 6, in welchem das Data Erkennungssystem (110) ein Mittel (270) beinhaltet, angeordnet um eine Kennzeichung zu gewissen Elementen zu verteilen zwischen mindestens dem stereoskopischen Kameramodul (100), des Data Erkennungssystems (110), oder dessen Komponenten, und zum Übertragen dieser Kennzeichung zum Kontrollsystem (120), um eine selektive Behandlung für jedes Bildaufnahmeelement zu erlaubten.

8. Stereoskopisches Bildaufnahmesystem nach einem der Anspruche 2 bis 7, beinhaltend mindestens zwei Bildaufnahmeelemente, angeordnet um zu formen, wirklich oder virtuell, wenigstens zwei distinkte stereoskopische Kameramodule, mit Mitbesitz - zumindest zum Teil - eines der Data Erkennungssystem (110), Kontrollsystem (120), Positioniersystem (130), und Betriebsvorrichtung (140).

9. Stereoskopisches Bildaufnahmesystem nach Anspruch 8, beinhaltend eine Vielzahl von Bildaufnahmeelementen, angeordnet um zu formen, wirklich oder virtuell, ein Netz von N vielen stereoskopischen Kameramodulen (100), mit Mitbesitz - zumindest zum Teil - eines der Data Erkennungssystem (110), Kontrollsystem (120), Positioniersystem (130), und Betriebsvorrichtung (140).

10. Stereoskopisches Bildaufnahmesystem nach einem der Anspruche 2 bis 9, in welchem das Data Erkennungssystem (110) eingerichtet ist um mindestens eine Data von hierarchischer Regelung (290) zu definieren, die bei Kontrollsystem (120) berücksichtigen ist.

11. Stereoskopisches Bildaufnahmesystem nach einem der Anspruche 2 bis 10, in welchem das Erkennungssystem (210) des Wertes des Konvergenzplanabstands ist verbunden mit einer Fokussteuerung, um zu interagieren auf die Art und Weise dass die Wahl des Standortes des Konvergenzplans und des Wertes des Fokus korreliert sind.

12. Elektronische Kontrollvorrichtung (120) eines stereoskopischen Kameramodul, für die Implementierung des Verfahrens nach Anspruch 1, welches beinhaltet:
- Eingangsmittel zum Erhalten der Variablen die ausdrücken,
die aktuellen Werte der Brennweite und Bildsensorgrösse, die auf die Bildaufnahmeelemente des Kameramodules anwesend sind, und
der Wert des Abstandes zwischen dem Kameramodul und einer Remote-Umgebung, und
ein gewünschten Wert der horizontalen Abweichung für diese Remote-Umgebung im stereoskopischen Endbild, und
ein Wert des gewünschten Standort des Konvergenzplans, und
- Verarbeitungsmittel zum bestimmen, gemäss diesen Variablen, die interachsialen und konvergenzen Werte die anzuwenden sind zwischen zwei stereoskopischen Bildaufnahmeelementen, und
- Ausgabemittel zum kommunizieren der bestimmten interachsialen und konvergenzen Werte, anzuwenden zwischen zwei Bildaufnahmeelementen eines stereoskopischen Kameramoduls.

13. Elektronische Kontrollvorrichtung (120) nach Anspruch 12, in welchem die Eingangsmittel erhalten auch einen Invarianzdämpferwert, der es erlaubt anzupassen die Resultate der interachsialen und konvergenzen Werte.

14. Elektronische Kontrollvorrichtung (120) nach einem der Anspruche 12 oder 13, in welchem die Eingangsmittel erhalten auch mindestens eine Data von hierarchischer Regelung die zu benutzen ist um die interachsialen und konvergenzen Werte zu bestimmen.

## Claims

1. A method for generating a stereoscopic image, comprising the following steps:
- get a stereoscopic shooting module consisting of a first imaging device and a second imaging device;
- determine the current values of focal length and image sensor's width set on first and second imaging device ;
- determine the distance value between the shooting module and a distant subject matter, chosen in the current scene to picture ;
- choose a wished horizontal offset value that shall be performed about that distant subject matter into the resulting stereoscopic image ;
- determine the distance value between a wished convergence plane and the shooting module;
- determine at least one interaxial value, proper to define an interaxial positioning to be set on first and second imaging device, and at least one convergence value, proper to define a converging angular positioning to be set on first and second imaging device, from these said current values of focal length and image sensor's width, said distance value between the shooting module and the chosen distant subject matter, said wished horizontal offset value, said distance value between the wished convergence plane and the shooting module;
- set the said interaxial value(s) and the said convergence value(s) on first and second imaging device;
- then perform a synchronized imaging capture with first and second imaging device.

2. A stereoscopic image shooting system comprising:
- a stereoscopic shooting module (100) consisting of a first imaging device (Lx) and a second imaging device (Rx);
- a data recognition system (110) comprising
• a focal length recognition system (240) recognizing the current value(s) of focal length set on first (Lx) and second (Rx) imaging device,
• a sensor's width recognition system (250) recognizing the current value(s) of image sensor's width set on first (Lx) and second (Rx) imaging device,
• a distance recognition system (260) recognizing the value of distance between the shooting module (100) and a distant subject matter chosen in the current scene to picture,
• a horizontal offset recognition system (200) collecting the value of horizontal offset wished for that distant subject matter into the output stereoscopic image,
• a distance recognition system (210) recognizing the value of distance between a wished convergence plane and the shooting module (100),
- a controlling system (120), which uses values collected by the data recognition system (110) to determine at least one interaxial value, proper to define an interaxial location to be set on first (Lx) and second (Rx) imaging device, and at least one convergence value, proper to define a converging angular positioning to be set on first (Lx) and second (Rx) imaging device,
- a placing system (130), which sets the said interaxial and convergence value(s) on first (Lx) and second (Rx) imaging device, in order to perform a synchronized imaging capture with first (Lx) and second (Rx) imaging device; and
- an exploitation system (140), which receives and uses the image signals output from this shooting.

3. Stereoscopic image shooting system of claim 2, also comprising a «Delta Epsilon» recognition system (280) determining a steadiness buffer value, while the controlling system (120) is set to adjust, depending on this said buffer value, the said interaxial and convergence values.

4. Stereoscopic image shooting system of either claim 2 and 3, wherein the data recognition system (110) also comprises a convergence recognition system (220) recognizing at least one value about the current convergence positioning of first (Lx) and second (Rx) imaging device.

5. Stereoscopic image shooting system of either claim 2 to 4, wherein the data recognition system (110) also comprises an interaxial recognition system (230) recognizing the current interaxial location of first (Lx) and second (Rx) imaging device.

6. Stereoscopic image shooting system of either claim 2 to 5, wherein the exploitation system (140) also receive at least some of the data output by the data recognition system (110).

7. Stereoscopic image shooting system of either claim 2 to, 6, wherein the data recognition system (110) comprises a mean (270) set up to assign at least one identifier to at least some elements among the stereoscopic shooting module (100), the data recognition system (110), or their components, and to transmit said identifier to the controlling system (120) in order to enable a selective treatment related to each element.

8. Stereoscopic image shooting system of either claim 2 to 7, comprising at least two imaging devices, set up to give form to, really or virtually, at least two distinct stereoscopic shooting modules (100), with sharing, a least in part, of at least one among the data recognition system (110), the controlling system (120), the placing system (130), and the exploitation system (140).

9. Stereoscopic image shooting system of claim 8, comprising a plurality of imaging devices, set up to give form to, really or virtually, a network consisting of N distinct stereoscopic shooting modules (100), with sharing, a least in part, of at least one among the data recognition system (110), the controlling system (120), the placing system (130), and the exploitation system (140).

10. Stereoscopic image shooting system of either claim 2 to 9 wherein the data recognition system (110) is set up to define at least one hierarchical constraint (290) to consider with at the controlling system (120) processing level.

11. Stereoscopic image shooting system of either claim 2 to 10 wherein the distance recognition system (210), recognizing the convergence plane distance value, is associated with a focus controller, to interact so that the convergence plane location and a focus distance are correlated.

12. Electronic controlling system (120) of a stereoscopic shooting module, to perform the method of claim 1, comprising
- input means to collect variables expressing current values of focal length and image sensor's width set on the stereoscopic shooting module imaging devices, a distance value between the stereoscopic shooting module and a distant subject matter chosen in a scene to picture, a wished horizontal offset value to be performed about said distant subject matter into the resulting stereoscopic image, and a distance value between the stereoscopic shooting module and a wished convergence plane, and
- processing means to determine, from said variables, said interaxial and convergence output values to be set on the stereoscopic shooting module's imaging devices, and
- output means to deliver said interaxial and convergence values to be set on a stereoscopic shooting module's imaging devices.

13. Electronic controlling system (120) of claim 12, wherein the input means also collect a steadiness buffer value, in order to adjust the said resulting interaxial and convergence output values.

14. Electronic controlling system (120) of either claim 12 and 13, wherein the input means also collect at least one hierarchical constraint (290) to consider with in order to determine the interaxial and convergence output values.
